# EUROPEAN PATENT APPLICATION

(11) **EP 0 970 747 A2**
(43) Date of publication of application: **12.01.2000**
(21) Application number: 99113160.8
(22) Date of filing: 07.07.1999
(51) Int. Cl.: B01J 37/03, B01J 32/00, B01J 23/40

(54) **Process for producing titanium-aluminum composite oxides and process for producing a catalyst containing same**

(30) Priority: 08.07.1998 JP 19336498; 07.08.1998 JP 22461498
(71) Applicant: TOYOTA JIDOSHA KABUSHIKI KAISHA, Aichi-ken 471-8571 (JP)
(72) Inventor: Yoshida, Takeru, Toyota-shi, Aichi-ken 471-8571 (JP); Ogura, Yoshitsugu, Toyota-shi, Aichi-ken 471-8571 (JP)
(74) Representative: Pellmann, Hans-Bernd, Dipl.-Ing.

(57) **Abstract**

Disclosed is a process for producing a composite metallic oxide. A solution is prepared by mixing a substituted aluminum alkoxide and a titanium salt or a titanium alkoxide in an organic solvent. The substituted aluminum alkoxide is an aluminum alkoxide whose at least one or more alkoxyl groups are substituted by a chelating agent. Then, the substituted aluminum alkoxide and the titanium salt or the titanium alkoxide are hydrolyzed, and are thereafter dried and burned. Since the substituted aluminum alkoxide and the titanium salt or the titanium alkoxide exhibit hydrolysis rates which are substantially equal to each other, free Al₂O₃ is inhibited from generating. Thus, the resulting composite metallic oxide has a fully homogeneous composition, and exhibits a large specific surface area. Also disclosed are one modified version of the production process and three processes for producing a composite metallic catalyst, processes which utilize the production process.

## Description

### BACKGROUND OF THE INVENTION

### Field of the Invention

The present invention relates to a process for producing a composite metallic oxide which is utilized as a support for an automotive exhaust-gas purifying catalyst, or the like, and a process for producing a composite metallic catalyst in which the resulting composite metallic oxide is made, for example, into a support.

### Description of the Related Art

As a support for an automotive exhaust-gas purifying catalyst, alumina (Al₂O₃) is used predominantly which has a large specific surface area and exhibits a high activity. Recently, there has arisen a technical assignment in that nitrogen oxides (NOₓ) should be purified in an exhaust gas under a lean atmosphere where oxygen is present in excess. Accordingly, as disclosed in Japanese Unexamined Patent Publication (KOKAI) No. 5-317,652, etc., a catalyst has been developed in which an NOₓ storage element, being selected from the group consisting of alkali metals and alkaline-earth metals, is loaded on a support, being made from Al₂O₃, together with a noble metal. In accordance with the catalyst, NOₓ is adsorbed on the NOₓ storage element in a lean atmosphere. At the stoichiometric point or in a rich atmosphere, the adsorbed NOₓ is released to react with a reducing gas, such as HC, and is thereby purified. Hence, even in a lean atmosphere, it is possible to suppress the emission of NOₓ and to obtain high NOₓ purifying performance.

However, there arises the following drawback in a catalyst in which an alkaline-earth metal, such as barium (Ba), and platinum (Pt) are loaded on an active alumina support. Namely, the alkaline-earth metal and the alumina react at around 800°C, thereby generating crystalline aluminate to decrease the NOₓ storage amount. In addition, the catalyst is insufficient in terms of the heat resistance accordingly.

Therefore, Japanese Unexamined Patent Publication (KOKAI) No. 8-057,312 discloses a catalyst which includes amorphous aluminate working as a support and a noble metal loaded on the amorphous aluminate. The amorphous aluminate is composed of a composite metallic oxide which includes an NOₓ storage element, being at least one member selected from the group consisting of alkali metals and alkaline-earth metals, and aluminum. By making the support from the composite metallic oxide, the crystalline aluminate is inhibited from generating at elevated temperatures. Thus, the catalyst is improved in terms of the heat resistance.

By the way, SO₂, which results from sulfur contained in a fuel, is included an exhaust gas, and, on a noble metal, it reacts with oxygen contained in a lean atmosphere to turn into SOₓ, such as SO₃. The resulting SOₓ is easily turned into sulfuric acid by water vapor contained in the exhaust gas. The SOₓ and the sulfuric acid react with an alkaline NOₓ storage elements to generate sulfites and sulfates. It has been revealed that the sulfites and sulfates decrease the function of the NOₓ storage element. This phenomenon is referred to as "sulfur poisoning". Moreover, since a porous support, such as Al₂O₃, has a property that it is likely to adsorb SOₓ, a problem arises in that the sulfur poisoning is facilitated.

Whilst, since TiO₂ does not adsorb SO₂, the inventors of the present invention thought of employing a TiO₂ support and carried out an experiment. As a result, the following were found out. Since SO₂ is not adsorbed on TiO₂ and flows downstream as it is, and since only the SO₂, which contacts directly with a noble metal, is oxidized, the sulfur poisoning occurs to a lesser extent. However, the catalyst employing the TiO₂ support is low in terms of the NOₓ purifying activity initially, and accordingly is not appropriate for an automotive exhaust-gas purifying catalyst.

Therefore, Japanese Unexamined Patent Publication (KOKAI) No. 8-099,034 proposes a composite metallic catalyst which employs a support made from a composite metallic oxide, such as TiO₂-Al₂O₃, and in which an NOₓ storage element and a noble metal are loaded on the support. In accordance with the catalyst, the NOₓ storage element is inhibited from suffering from the sulfur poisoning, and high NOₓ purifying performance can be secured even after the catalyst is subjected to a durability test.

As a process for producing such a composite metallic oxide, a production process has been known as disclosed in Japanese Examined Patent Publication (KOKOKU) No. 2-033,644, for example. The production process is characterized in that two or more oxygen-containing organometallic compounds are mixed in a solvent, which contains a polar compound having a multidentate ligand or a cross-linkage coordination ability; they are turned into a gel by hydrolysis; and the resulting gel is thereafter dried and burned. In accordance with the production process, it is possible to easily produce a relatively homogenous composite metallic oxide. Then, it is possible to produce a composite metallic catalyst by loading a noble metal, such as Pt, on a support composed of the composite metallic oxide.

Japanese Examined Patent Publication (KOKOKU) No. 2-033,644 exemplifies metallic alkoxides as the oxygen-containing organometallic compounds. Hence, when the aforementioned production process is utilized in order to produce an Al-Ti composite oxide, it is possible to think of using an aluminum alkoxide and a titanium alkoxide.

However, an aluminum alkoxide and a titanium alkoxide exhibit different hydrolysis reaction rates. Hence, as described later, it is difficult to produce an Al-Ti composite oxide having a fully homogeneous composition by the production process disclosed in Japanese Examined Patent Publication (KOKOKU) No. 2-033,644.

Therefore, when a catalyst employs an Al-Ti composite oxide, which is produced by the production process disclosed in Japanese Examined Patent Publication (KOKOKU) No. 2-033,644, as a support, TiO₂ effects the sulfur-poisoning suppression insufficiently. Accordingly, the catalyst is not sufficiently inhibited from decreasing the NOₓ conversion after it is subjected to a durability test.

Moreover, according to a study conducted by the present inventors, the following were revealed. When a composite metallic oxide is synthesized by using an aluminum alkoxide, the resulting composite metallic oxide is insufficient in terms of the heat resistance, and its specific surface area is decreased inevitably. When such a composite metallic oxide is made into a support, and when an NOₓ storage element is loaded thereon or composited therewith, the resulting catalyst suffers from the following drawbacks. Namely, when the catalyst is subjected to elevated temperatures during the service, the dispersibility of the NOₓ storage element decreases so that the NOₓ storage element crystallizes. As a result, the catalyst exhibits deteriorated NOₓ purifying performance.

Thus, in the case where a composite metallic oxide is synthesized by using an aluminum alkoxide, the resulting composite metallic oxide is insufficient in terms of the heat resistance, and its specific surface area is decreased inevitably as described above. Therefore, when a composite metallic oxide, which is produced by the production process disclosed in the aforementioned publication, is made into a support, and when an NOₓ storage element and a noble metal are loaded on the support to make a catalyst, the resulting catalyst suffers from the following drawbacks. Namely, when the catalyst is subjected to elevated temperatures during the service, the dispersibilities of the NOₓ storage element and the noble metal decrease so that the noble metal grows granularly and the NOₓ storage element crystallizes. As a result, the catalyst is deteriorated in terms of the 3-way catalytic activity and the NOₓ purifying performance.

Whilst, when a composite metallic oxide, such as TiO₂-Al₂O₃, disclosed in Japanese Unexamined Patent Publication (KOKAI) No. 8-099,034, is made into a support, and when a noble metal is loaded on the support to make a catalyst, the granular growth of the noble metal occurs not a little in a high-temperature durability test because the support does not possess a sufficiently homogeneous composition. Hence, the resulting catalyst is insufficient in terms of the 3-way catalytic activity.

### SUMMARY OF THE INVENTION

The present invention has been developed in view of the aforementioned circumstances. It is therefore an object of the present invention to make it possible to easily and stably produce a catalyst in which an Al-Ti composite oxide having a sufficiently homogenous composition is made into a support. It is another object of the present invention to make the catalyst exhibit high heat resistance and high purifying performance even after the catalyst is subjected to a high-temperature durability test.

A process for producing a composite metallic oxide set forth in Claim 1 solves the aforementioned technical assignments, and is characterized in that it comprises the steps of:
preparing a solution in which a substituted aluminum alkoxide and at least one of a titanium salt and a titanium alkoxide are mixed in an organic solvent, wherein the substituted aluminum alkoxide is an aluminum alkoxide whose at least one or more alkoxyl groups are substituted by a chelating agent; and
drying and burning the components of the solution after hydrolyzing them.

A process for producing a composite metallic oxide set forth in Claim 2 further embodies the process for producing a composite metallic oxide set forth in Claim 1, and is characterized in that it comprises the steps of:
preparing a solution in which a substituted aluminum propoxide and a titanium tetraisopropoxide are mixed in an organic solvent, wherein the substituted aluminum propoxide is aluminum triisopropoxide whose at least one or more isopropoxyl groups are substituted by ethyl acetoacetate; and
drying and burning the alkoxides after hydrolyzing them.

A process for producing a composite metallic catalyst set forth in Claim 3 solves the aforementioned technical assignments, and is characterized in that it comprises the steps of:
preparing a solution in which a substituted aluminum alkoxide and at least one of a titanium salt and a titanium alkoxide are mixed in an organic solvent, wherein the substituted aluminum alkoxide is an aluminum alkoxide whose at least one or more alkoxyl groups are substituted by a chelating agent;
drying and burning the components of the solution after hydrolyzing them, thereby forming a support; and
loading a noble metal at least on the support.

A process for producing a composite metallic catalyst set forth in Claim 4 further embodies the process for producing a composite metallic catalyst set forth in Claim 3, and is characterized in that it comprises the steps of:
preparing a solution in which a substituted aluminum propoxide and a titanium tetraisopropoxide are mixed in an organic solvent, wherein the substituted aluminum propoxide is aluminum triisopropoxide whose at least one or more isopropoxyl groups are substituted by ethyl acetoacetate;
drying and burning the alkoxides after hydrolyzing them, thereby forming a support; and
loading a noble metal at least on the support.

A process for producing a composite metallic catalyst set forth in Claim 5 is characterized in that it comprises the steps of:
mixing a substituted aluminum alkoxide and a soluble compound in an organic solvent, wherein the substituted aluminum alkoxide is an aluminum alkoxide whose at least one or more alkoxyl groups are substituted by a chelating agent, and the soluble compound is soluble in the organic solvent and includes a catalyst metal element composed of at least one of an NOₓ storage element and a noble metal, the NOₓ storage element being at least one member selected from the group consisting of alkali metals, alkaline-earth metals and rare-earth elements; and
drying and burning the components of the mixture after hydrolyzing the substituted aluminum alkoxide at least.

A process for producing a composite metallic catalyst set forth in Claim 6 is characterized in that, in the process for producing a composite metallic catalyst set forth in Claim 5, the chelating agent is ethyl acetoacetate.

In accordance with the process for producing a composite metallic oxide according to the present invention, it is possible to securely produce a composite metallic oxide which has a homogeneous composition, and which is good in terms of the heat resistance.

In accordance with the process for producing a composite metallic catalyst according to the present invention, it is possible to easily and stably produce a catalyst which exhibits a large specific surface area, in which the dispersibilities of an NOₓ storage element and a noble metal are improved, and which is good in terms of the heat resistance and the sulfur-poisoning resistance.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is an explanatory diagram for illustrating the sequence of the steps in an example of the production process according to the present invention;
Fig. 2 is a bar graph for illustrating the specific surface areas which were exhibited by Al-Ti composite oxides produced by Example Nos. 1 through 10 and Comparative Example Nos. 1 through 4;
Fig. 3 is an X-ray diffraction chart for illustrating the X-ray diffraction patterns which were exhibited by Al-Ti composite oxides produced by Example Nos. 1, 3, 5 and 7 and Comparative Example Nos. 1 and 3; and
Fig. 4 is an X-ray diffraction chart for illustrating the X-ray diffraction patterns which were exhibited by Al-Ti composite oxides produced by Example Nos. 2, 4, 6 and 8 and Comparative Example Nos. 2 and 4.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The inventors of the present invention carried out a study in order to apply the production process disclosed in Japanese Examined Patent (KOKOKU) No. 2-033,644 to the production of an Al-Ti composite oxide. However, when an Al-Ti composite oxide was produced by this production process, the following phenomena were revealed. Namely, the resulting Al-Ti composite oxide exhibited a decreased specific surface area when it was burned at a temperature of about 900°C. The burning resulted in the generation of α-Al₂O₃. According to these phenomena, it was discovered that free Al₂O₃, which did not constitute composite oxide, resided in a large amount in the thus produced Al-Ti composite oxide. Namely, the free Al₂O₃ is turned into α-Al₂O₃ at elevated temperatures so that the specific surface area of the Al-Ti composite oxide decreases. Accordingly, when the Al-Ti composite oxide is used in a catalyst, there arises a drawback in that the resulting catalyst exhibits decreased activities.

The cause of the adverse phenomena was further investigated. As a result, it was considered that the free Al₂O₃, which was not composited with TiO₂, was generated because an aluminum alkoxide exhibited a hydrolysis rate faster than that of a titanium alkoxide. Namely, when an aluminum alkoxide and a titanium alkoxide are hydrolyzed in a coexisting state, the aluminum alkoxide is hydrolyzed faster than the titanium alkoxide. Accordingly, after burning the resulting Al-Ti composite oxide, Al₂O₃, which is not composited, resides in the Al-Ti composite oxide.

Therefore, the present production process employs the substituted aluminum alkoxide, which is an aluminum alkoxide whose at least one or more alkoxyl groups are substituted by a chelating agent, as one of the composite metallic oxide sources.

This substituted aluminum alkoxide is featured in that it exhibits a hydrolysis rate slower than that of the aluminum alkoxide. Accordingly, the hydrolysis rate of the substituted aluminum alkoxide is substantially equal to that of a titanium alkoxide, for example. Thus, Al₂O₃ and TiO₂ are composited facilitatively. Further, it is considered that, by employing the substituted aluminum alkoxide, the compositing metallic elements, such as Al and Ti, are combined by way of the chelating agent. Furthermore, since the substituted aluminum alkoxide exists stably in an organic solvent, there arises no such a drawback that the aluminum alkoxide exhibiting a large hydrolysis rate is isolated by the dissociation of the chelating agent.

Whilst, when the substituted aluminum propoxide, which is an aluminum triisopropoxide whose one or more isopropyl groups are substituted by ethyl acetoacetate, and the titanium tetraisopropoxide are employed, the substituted aluminum propoxide and the titanium tetraisopropoxide exhibit hydrolysis rates which are extremely close to each other. Accordingly, the free Al₂O₃, which does not constitute a composite oxide, is furthermore inhibited from residing in the resulting Al-Ti composite oxide. Thus, it is possible to obtain an Al-Ti composite oxide which exhibits a larger specific surface area and which has a homogeneous composition.

Moreover, since the substituted aluminum propoxide whose isopropoxyl groups are substituted by ethyl acetoacetate solves in 2-propanol at room temperature, an advantage is produced in that the yield of an Al-Ti composite oxide is improved to twice as much as the case where the substituted aluminum propoxide is not used.

In addition, when the soluble compound, which is soluble in the organic solvent and includes a catalyst metal element composed of at least one of an NOₓ storage element and a noble metal, and the substituted aluminum alkoxide is mixed in an organic solvent, and when the substituted aluminum alkoxide is subsequently hydrolyzed at least, the substituted aluminum alkoxide is featured in that it exhibits a hydrolysis rate lower than that of an aluminum alkoxide. Accordingly, compared with the case where an aluminum alkoxide is used, the substituted aluminum alkoxide is composited with the soluble compound facilitatively.

Due to these actions, the free Al₂O₃, which is not composited, is inhibited from residing in the resulting Al-Ti composite oxide, and a composite is formed in which aluminum and the catalyst metal element are composited homogeneously. Accordingly, the resulting composite metallic oxide exhibits a large specific surface area and has a homogeneous composition. Thus, the dispersibilities of the NOₓ storage element and the noble metal are improved, and the heat resistances thereof are enhanced.

As for the aluminum alkoxide working as the Al₂O₃ source, in view of easy drying, etc., an alkoxide is preferred whose alkoxyl group has carbon atoms in a quantity of from 1 to 5. For example, it is possible to employ aluminum methoxide, aluminum ethoxide, aluminum propoxide, aluminum isopropoxide, aluminum butoxide and aluminum isobutoxide.

In the present production process, the substituted aluminum alkoxide is employed in which at least one of the alkoxyl groups of the aforementioned aluminum alkoxides is substituted by a chelating agent. When all of the alkoxyl groups of the aluminum alkoxides are substituted by a chelating agent, there arises a case where the specific surface area of the resulting composite metallic oxide might decrease. Accordingly, the substituted aluminum alkoxide is employed in which one or two of the alkoxyl groups are substituted by a chelating agent. Among substituted aluminum alkoxides, a substituted aluminum alkoxide is especially preferred in which two alkoxyl groups are substituted by a chelating agent because its hydrolysis rate is furthermore lowered.

As for the chelating agent, it is possible to employ dimethylglyoxim, dithizone, oxine, ethyl acetoacetate, acetylacetone, glycine, EDTA and NTA. When ethyl acetoacetate is employed out of the chelating agents, the hydrolysis rate becomes optimum. Accordingly, the specific surface area of the resulting composite metallic oxide is especially upgraded.

As for the titanium salt working as the TiO₂ source, a titanium salt is employed which is soluble in an organic solvent to be employed. For example, it is possible to employ titanium nitrate, titanium chloride, titanium acetate, ammonium titanate and a titanium complex.

As for the titanium alkoxide working as the TiO₂ source, in view of easy drying, etc., an alkoxide is preferred whose alkoxyl group has carbon atoms in a quantity of from 1 to 5. For example, it is possible to employ titanium methoxide, titanium ethoxide, titanium propoxide, titanium isopropoxide, titanium butoxide and titanium isobutoxide.

The mixing ratio of the Al₂O₃ source and the TiO₂ source is determined in accordance with the compositions of the target Al-Ti composite oxides. When the Al-Ti composite oxide is utilized as a support of an exhaust-gas purifying catalyst, it is preferred that the Al₂O₃ source and the TiO₂ source is mixed so that an Al₂O₃/TiO₂ ratio falls in the range of from 1/30 to 30/1 (i.e., Al₂O₃/TiO₂ = 30/1-1/30).

As for the catalyst metal element, at least one of an NOₓ storage element, being at least one member selected from the group consisting of alkali metals, alkaline-earth metals and rare-earth elements, and a noble metal can be selected. As for the alkali metals, lithium, sodium, potassium and cesium can be listed. The alkaline-earth metals are the elements of group 2A in the periodic table of elements, and magnesium, calcium, strontium and barium can be listed. As for the rare-earth elements, scandium, yttrium, lanthanum, cerium, praseodymium and neodymium can be exemplified. As for the noble metal, platinum (Pt), rhodium (Rh), palladium (Pd) and iridium (Ir) can be exemplified.

For instance, when an NOₓ storage element is selected as the catalyst metal element, a catalyst can be formed by loading a noble metal on the thus formed composite metallic oxide by an impregnation loading method or an adsorption loading method. Further, when a noble metal is selected as the catalyst metal element, a catalyst can be formed by loading an NOₓ storage element on the thus formed composite metallic oxide by an impregnation loading method. Furthermore, when both an NOₓ storage element and a noble metal element are employed as the catalyst metal elements, since it is possible to produce a catalyst in which both of the NOₓ storage element and the noble metal element are dispersed uniformly and to get rid of the subsequent loading step, the arrangement is especially preferred.

The NOₓ storage element can preferably be composited with or loaded on the composite metallic oxide in an amount of from 2 to 50% by mol with respect to the alumina, which is made from the substituted aluminum alkoxide. When the amount is less than the range, the NOₓ purifying performance is low because the NOₓ storage activity is insufficient. When the amount is more than the range, the effect of the NOₓ storage element saturates, and the NOₓ storage element is likely to react with the alumina so that the heat resistance decreases.

The noble metal can preferably be composited with or loaded on the composite metallic oxide in an amount of from 0.1 to 20% by weight with respect to the alumina, which is made from the substituted aluminum alkoxide. When the amount is less than the range, the purifying performance is low. When the noble metal is loaded more than the range, the effect of the noble metal saturates, and the cost of the resulting catalyst goes up.

Note that, in addition to aluminum, it is possible to employ a metal, such as titanium, zirconium and silicon. In this case, the metal, such as titanium, zirconium and silicon, can be mixed as an oxide powder, or can be supplied as an alkoxide so that it can be composited with the aluminum and the catalyst metal element. Moreover, it is preferred that an oxygen storage-and-release member, such as ceria and ceria-zirconia, is mixed or composited therewith. By further compositing titanium therewith, the NOₓ storage element is further inhibited from the sulfur poisoning.

The soluble compound, which includes the catalyst metal element and is soluble in an organic solvent, can be a compound which is soluble in an organic solvent to be employed. It is possible to employ therefor an organometallic compound, such as an alkoxide, metallic nitrate, metallic acetate, a metallic ammine complex and metallic chloride.

As for the organic solvent, a solvent can be employed which solves the substituted aluminum alkoxide, the titanium salt and the titanium alkoxide, or the soluble compound. It is possible to employ methanol, ethanol, 1-propanol, 2-propanol, butanol, isobutanol, sec-butanol and tert-butanol.

In order to hydrolyze the alkoxide in a solution, the water contained in air can be utilized, but it is preferred that water is added to the solution while stirring the solution at a predetermined temperature. By abruptly carrying out the reaction, it is possible to further enlarge the specific surface area of the resulting composite metallic oxide.

Regarding the water addition amount, it takes longer for the hydrolysis when the addition is too small. When the addition is too much, it is difficult to carry out homogeneous hydrolysis so that the composition of the resulting composite metallic oxide becomes inhomogeneous. Therefore, the water addition amount can preferably fall in the range of from 0.5 to 20 by molar ratio with respect to the alkoxide to be employed, especially desirably in the range of from 1 to 10 by molar ratio.

In order to further facilitate the hydrolysis reaction, it is preferred that a hydrolysis facilitating agent, which includes an alkaline substance, such as ammonium, ammonium carbonate and amines, or acids, such as formic acid, oxalic acid and tartaric acid, is added to the solution.

The heating temperature in the hydrolysis step can preferably fall in the range of from 35 to 150°C. When it is less than 35°C, it takes longer for the reaction because the reaction rate is low. When the reaction time is short, the free Al₂O₃, which is not composited, resides in a large amount. When the heating temperature exceeds 150°C, the alkoxide may decompose. It is especially desirable that the heating temperature falls in the range of from 40 to 100°C.

After the hydrolysis, the precipitate is dried to remove the solvents, etc., and is burned, thereby obtaining the composite metallic oxide. Depending on the needs, one of the NOₓ storage element and the noble metal is loaded on the composite metallic oxide, thereby obtaining the composite metallic catalyst. The drying conditions are not limited in particular. The burning temperature can preferably fall in the range of from 500 to 1,200°C. When the burning temperature is less than 500°C, it is difficult to form the stable composite metallic catalyst. When the burning temperature exceeds 1,200°C, the specific surface area of the resulting composite metallic catalyst decreases.

The present invention will be hereinafter described in detail with reference to examples and comparative examples.

### Example No. 1

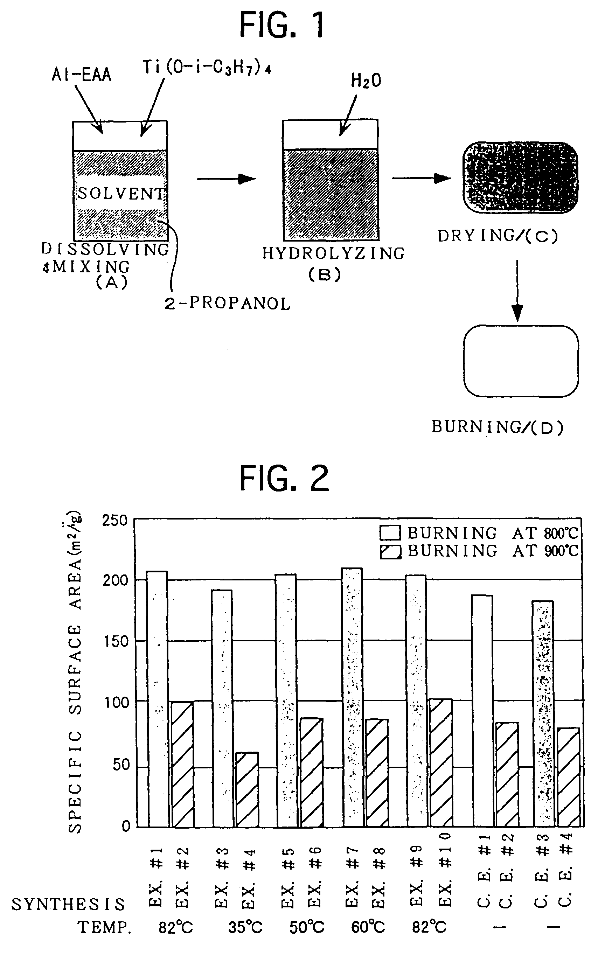

An Al-Ti composite oxide was produced in accordance with a diagram shown in Fig. 1.

First, 154.6 g of ethyl acetate aluminum diisopropylate (Al-EAA) (a substituted aluminum alkoxide), working as an Al₂O₃ source, and 40.1 g of titanium tetraisopropoxide (Ti(O-i-C₃H₇)₄), working as a TiO₂ source, were added to 423.4 g of 2-propanol, and were dissolved therein by stirring the mixture at 82°C for 2 hours (Fig. 1 (A)).

Then, the resulting solution was held at 82°C under reflux. While stirring the solution, 121.9 g of ion-exchanged water was dropped to the solution to hydrolyze the alkoxides. The solution was further stirred at 82°C under reflux for 4 hours, thereby carrying out aging (Fig. 1 (B)).

Thereafter, the solution was vacuum-dried to remove the solvent, and the resulting precipitate was further dried at 120°C for 12 hours (Fig. 1 (C)). Thereafter, the precipitate was calcined at 480°C for 4 hours, and was burned in air at 800°C for 5 hours (Fig. 1 (D)), thereby obtaining an Al-Ti composite oxide of this example.

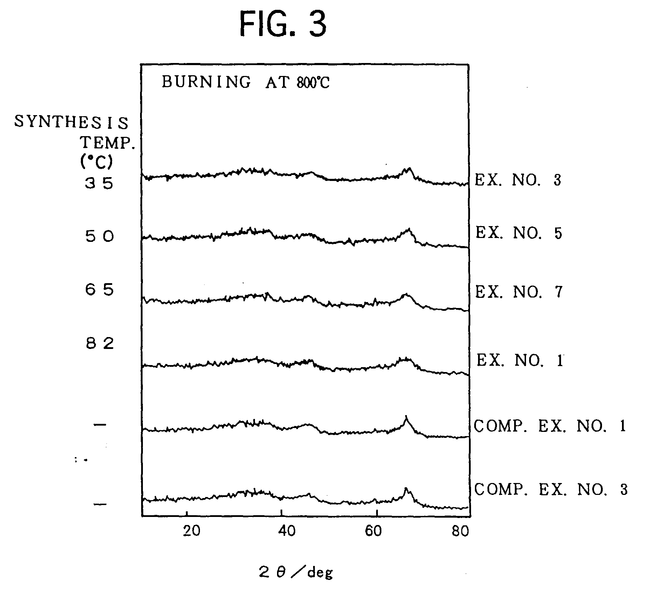

The specific surface area of the resulting Al-Ti composite oxide was measured by the BET method, and the result is illustrated in Fig. 2. Moreover, the Al-Ti composite oxide was subjected to an X-ray diffraction analysis, and the resulting X-ray diffraction chart is shown in Fig. 3.

### Example No. 2

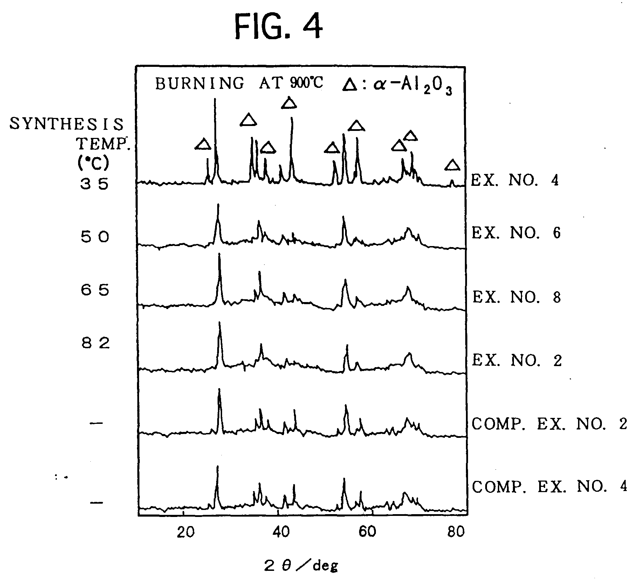

Except that the burning temperature was set at 900°C instead of 800°C, an Al-Ti composite oxide of Example No. 2 was obtained in the same manner as Example No. 1. The specific surface area was measured in the same manner as Example No. 1, and the result is illustrated in Fig. 2. Moreover, the X-ray diffraction chart is shown in Fig. 4.

### Example No. 3

Except that the heating temperature in the dissolving step, the hydrolysis step and the aging step was set at 35°C instead of 82°C, an Al-Ti composite oxide of Example No. 3 was obtained in the same manner as Example No. 1. The specific surface area was measured in the same manner as Example No. 1, and the result is illustrated in Fig. 2. Moreover, the X-ray diffraction chart is shown in Fig.3.

### Example No. 4

Except that the burning temperature was set at 900°C instead of 800°C, an Al-Ti composite oxide of Example No. 4 was obtained in the same manner as Example No. 3. The specific surface area was measured in the same manner as Example No. 1, and the result is illustrated in Fig. 2. Moreover, the X-ray diffraction chart is shown in Fig. 4.

### Example No. 5

Except that the heating temperature in the dissolving step, the hydrolysis step and the aging step was set at 50°C instead of 82°C, an Al-Ti composite oxide of Example No. 5 was obtained in the same manner as Example No. 1. The specific surface area was measured in the same manner as Example No. 1, and the result is illustrated in Fig. 2. Moreover, the X-ray diffraction chart is shown in Fig.3.

### Example No. 6

Except that the burning temperature was set at 900°C instead of 800°C, an Al-Ti composite oxide of Example No. 6 was obtained in the same manner as Example No. 5. The specific surface area was measured in the same manner as Example No. 1, and the result is illustrated in Fig. 2. Moreover, the X-ray diffraction chart is shown in Fig. 4.

### Example No. 7

Except that the heating temperature in the dissolving step, the hydrolysis step and the aging step was set at 65°C instead of 82°C, an Al-Ti composite oxide of Example No. 7 was obtained in the same manner as Example No. 1. The specific surface area was measured in the same manner as Example No. 1, and the result is illustrated in Fig. 2. Moreover, the X-ray diffraction chart is shown in Fig.3.

### Example No. 8

Except that the burning temperature was set at 900°C instead of 800°C, an Al-Ti composite oxide of Example No. 8 was obtained in the same manner as Example No. 7. The specific surface area was measured in the same manner as Example No. 1, and the result is illustrated in Fig. 2. Moreover, the X-ray diffraction chart is shown in Fig. 4.

### Example No. 9

Except that 26.7 g of TiCl₄ was employed as the TiO₂ source instead of 40.1 g of titanium tetraisopropoxide (Ti(O-i-C₃H₇)₄), an Al-Ti composite oxide of Example No. 9 was obtained in the same manner as Example No. 1. The specific surface area was measured in the same manner as Example No. 1, and the result is illustrated in Fig. 2.

### Example No. 10

Except that the burning temperature was set at 900°C instead of 800°C, an Al-Ti composite oxide of Example No. 10 was obtained in the same manner as Example No. 9. The specific surface area was measured in the same manner as Example No. 1, and the result is illustrated in Fig. 2.

### Comparative Example No. 1

115.1 g of aluminum triisopropoxide (Al(O-i-C₃H₇)₃), working as an Al₂O₃ source, and 40.1 g of titanium tetraisopropoxide (Ti(O-i-C₃H₇)₄), working as a TiO₂ source, were added to 423.4 g of 2-propanol, and were dissolved therein by stirring the mixture at 82°C for 2 hours.

Then, the resulting solution was held at 82°C. While stirring the solution, 28.2 g of 2,4-pentanedione (acetylacetone) was dropped to the solution. The solution was further stirred at 82°C for 2 hours. Thereafter, the solution was held at 82°C. While stirring the solution, 121.9 g of ion-exchanged water was dropped to the solution to hydrolyze the alkoxides. The solution was further stirred at 82°C for 4 hours, thereby carrying out aging.

Thereafter, the solution was vacuum-dried to remove the solvent, and the resulting precipitate was further dried at 120°C for 12 hours. Thereafter, the precipitate was calcined at 480°C for 4 hours, and was burned in air at 800°C for 5 hours, thereby obtaining an Al-Ti composite oxide of this comparative example. Then, the specific surface area was measured in the same manner as Example No. 1, and the result is illustrated in Fig. 2. Moreover, the X-ray diffraction chart is shown in Fig. 3.

### Comparative Example No. 2

Except that the burning temperature was set at 900°C instead of 800°C, an Al-Ti composite oxide of Comparative Example No. 2 was obtained in the same manner as Comparative Example No. 1. The specific surface area was measured in the same manner as Example No. 1, and the result is illustrated in Fig. 2. Moreover, the X-ray diffraction chart is shown in Fig. 4.

### Comparative Example No. 3

Except that 36.7 g of ethyl acetoacetate was topped instead of 28.2 g of 2,4-pentanedione (acetylacetone), an Al-Ti composite oxide of Comparative Example No. 3 was obtained in the same manner as Comparative Example No. 1. The specific surface area was measured in the same manner as Example No. 1, and the result is illustrated in Fig. 2. Moreover, the X-ray diffraction chart is shown in Fig.3.

### Comparative Example No. 4

Except that the burning temperature was set at 900°C instead of 800°C, an Al-Ti composite oxide of Comparative Example No. 4 was obtained in the same manner as Comparative Example No. 3. The specific surface area was measured in the same manner as Example No. 1, and the result is illustrated in Fig. 2. Moreover, the X-ray diffraction chart is shown in Fig. 4.

### Evaluation

Table 1 summarizes the types of the chelating agents, the heating temperatures in the dissolving step, the hydrolysis step and the aging step, and the burning temperatures, which were employed to produce the Al-Ti composite oxides of examples and comparative examples.

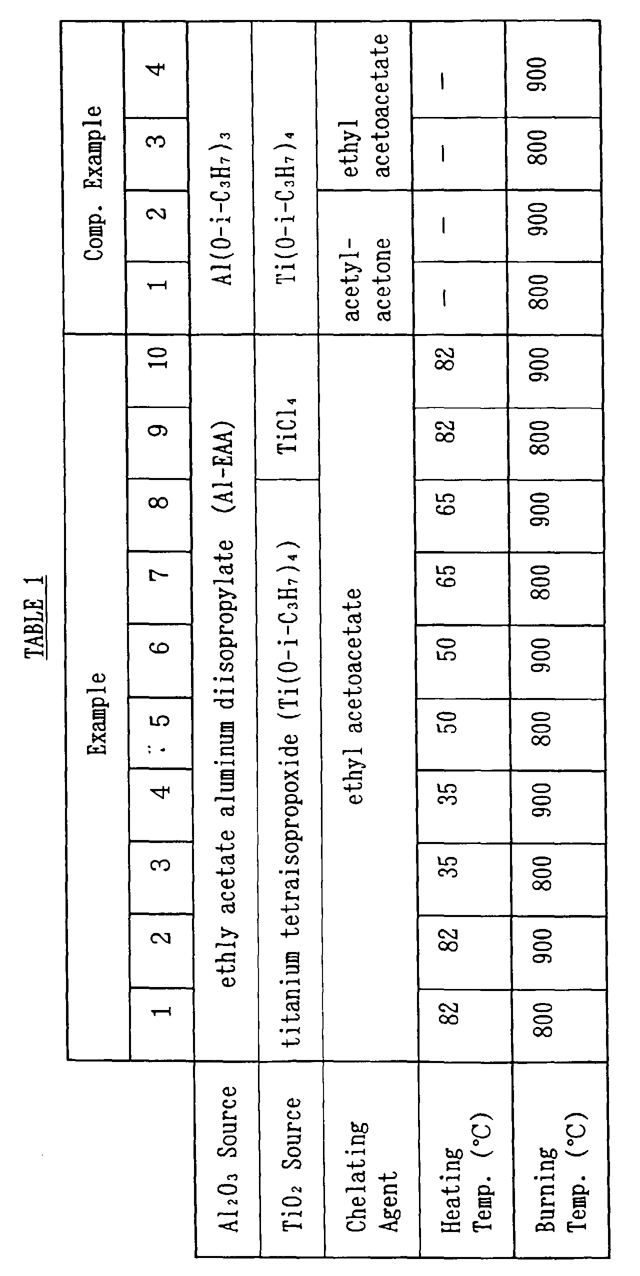

According to Fig. 2, when the burning was carried out at 800°C, Example No. 3 exhibited the smallest specific surface area in examples. However, it is understood that the Al-Ti composite oxide of Example No. 3 exhibited the specific surface area which was equivalent to those of Comparative Example No. 1 and Comparative Example No. 3, and that the Al-Ti composite oxides of the other examples exhibited the specific surface areas higher than those of Comparative Example No. 1 and Comparative No. 3. When the burning was carried out at 900°C, it is understood that the Al-Ti composite oxides of the examples, excepting Example No. 4, exhibited the specific surface areas higher than those of the comparative examples.

Therefore, the following are apparent. Namely, in the case where the burning temperature is 800°C, and if the heating temperature is set at 35°C or more; and in the case where the burning temperature is 900°C, and if the heating temperature is set at 50°C or more; the present production process can produce Al-Ti composite oxides which exhibit specific surface areas equivalent to or more than those of Al-Ti composite oxides produced by the conventional production process.

In Fig. 4, the peaks of α-Al₂O₃ are observed in all of the Al-Ti composite oxides. Since α-Al₂O₃ is generated when ordinary alumina is heated, the presence of α-Al₂O₃ proves the presence of the free alumina which is not turned into an Al-Ti composite oxide. However, in the examples, the peak intensity of α-Al₂O₃ lowered as the heating temperature was elevated. For example, Example No. 6 exhibited the peak intensity equivalent to those of Comparative Example No. 2 and Comparative Example No. 4. Hence, from the viewpoint of the homogeneity of an Al-Ti composite oxide, Example No. 6 is equal to Comparative Example Nos. 2 and 4. The heating temperature was 65°C and 82°C in Example No. 8 and Example No. 2, and accordingly Example No. 8 and Example No. 2 exhibited higher homogeneity than Comparative Example Nos. 2 and 4.

Namely, when the heating temperature is set at 50°C or more, and when the burning temperature is set at 900°C, it is possible to produce Al-Ti composite oxides which are homogeneous equivalent to or more than those of the comparative examples in which the conventional production process was employed. This agrees with the results shown in Fig. 2, and there is apparently a close relationship between the specific surface area and the α-Al₂O₃ content. In addition, it is evident that the present production process can securely produce Al-Ti composite oxides of furthermore homogeneous compositions than the conventional production process does.

Whilst, in Fig. 3, the peaks of α-Al₂O₃ are not observed in all of the Al-Ti composite oxides. Accordingly, if the burning temperature is up to 800°C and when the heating temperature is set at 35°C, it is evident that it is possible to produce Al-Ti composite oxides which are equally homogeneous to the comparative examples.

Namely, when an Al-Ti composite oxide produced by the present production process is made into a support, and when the support is loaded with a noble metal element or an NOₓ storage element to make a composite metallic catalyst, the composite metallic catalyst exhibits a high activity because it exhibits a high specific surface area, and it is good in terms of the sulfur-poisoning resistance. Even after it is subjected to a high-temperature durability test, the specific surface area of the support is inhibited from decreasing. Accordingly, the granular growth of the noble metal or the crystallization of the NOₓ storage element, which results from the decrement of the specific surface area, is suppressed. Thus, the composite metallic catalyst can maintain a high purifying activity.

### Example No. 11

First, 572.76 g of a solution, in which ethyl acetate aluminum diisopropylate (Al-EAA) (a substituted aluminum alkoxide), working as an Al₂O₃ source, was dissolved in an amount of 75% by weight in 2-propanol, and 26.7 g of barium diisopropoxide (Ba(O-i-C₃H₇)₂) were mixed in 877.8 g of 2-propanol, and were dissolved by stirring at 82°C for 2 hours.

Then, the resulting solution was held at 82°C under reflux. While stirring the solution, 268.5 g of ion-exchanged water was dropped to the solution to hydrolyze the alkoxides. The solution was further stirred at 82°C under reflux for 5 hours, thereby carrying out aging.

Thereafter, the solution was vacuum-dried to remove the solvent, and the resulting precipitate was further dried at 120°C for 12 hours. Subsequently, the precipitate was calcined at 480°C for 4 hours, and was burned in air at 1,100°C for 5 hours, thereby obtaining a composite metallic oxide. The specific surface area of the resulting composite metallic oxide was measured by the one-point BET method, and the result is set forth in Table 2.

A dinitrodiammine platinum aqueous solution having a predetermined concentration was impregnated into the thus obtained composite metallic oxide in a predetermined amount. After drying the composite metallic oxide at 120°C for 1 hour, the composite metallic oxide was burned at 250°C for 1 hour to load Pt. Moreover, the composite metallic oxide was molded to a pellet shape by an ordinary method, thereby preparing a composite metallic catalyst of this example. This composite metallic catalyst comprised a support including the composite metallic oxide, composed of alumina and barium oxide, and Pt loaded on the support. Pt was loaded in an amount of 2% by weight.

The resulting pelletized catalyst was placed in a flow of a lean-atmosphere model gas which contained SO₂ in an amount of 600 ppm. Then, a durability treatment was carried out in which the pelletized catalyst was heated at 700°C for 5 hours. After the durability treatment, the pelletized catalyst was measured for the maximum conversion of NOₓ in an atmosphere fluctuating from rich to lean. The result is set forth in Table 2.

### Example No. 12

Except that 477.2 g of the same 75% solution of ethyl acetate aluminum diisopropylate as Example No. 11, 44.5 g of barium diisopropoxide and 796.8 g of 2-propanol were dissolved, that 235.4 g of ion-exchanged water was dropped in the hydrolysis step, and that the burning temperature was further set at 900°C, a composite metallic oxide of Example No. 12 was prepared in the same manner as Example No. 11.

Then, the specific surface area was measured in the same manner as Example No. 11. In addition, Pt was likewise loaded, thereby preparing a pelletized catalyst which comprised a composite metallic catalyst of Example No. 12. The pelletized catalyst was similarly measured for the maximum NOₓ conversion after the durability treatment. The results are set forth in Table 2.

### Example No. 13

Except that 620.7 g of the same 75% solution of ethyl acetate aluminum diisopropylate as Example No. 11, 27.8 g of potassium acetate (CH₃COOK) in place of barium diisopropoxide and 1,036.4 g of 2-propanol were dissolved, that 306.3 g of ion-exchanged water was dropped in the hydrolysis step, and that the burning temperature was further set at 1,000°C, a composite metallic oxide of Example No. 13 was prepared in the same manner as Example No. 11.

Then, the specific surface area was measured in the same manner as Example No. 11. In addition, Pt was likewise loaded, thereby preparing a pelletized catalyst which comprised a composite metallic catalyst of Example No. 13. The pelletized catalyst was similarly measured for the maximum NOₓ conversion after the durability treatment. The results are set forth in Table 2.

### Example No. 14

Except that 557.6 g of the same 75% solution of ethyl acetate aluminum diisopropylate as Example No. 11, 25.0 g of potassium acetate in place of barium diisopropoxide, 36.2 g of titanium tetraisopropoxide (Ti(O-i-C₃H₇)₄) and 1,007.5 g of 2-propanol were dissolved, that 302.6 g of ion-exchanged water was dropped in the hydrolysis step, and that the burning temperature was further set at 900°C, a composite metallic oxide of Example No. 14 was prepared in the same manner as Example No. 11.

Then, the specific surface area was measured in the same manner as Example No. 11. In addition, Pt was likewise loaded, thereby preparing a pelletized catalyst which comprised a composite metallic catalyst of Example No. 14. The pelletized catalyst was similarly measured for the maximum NOₓ conversion after the durability treatment. The results are set forth in Table 2.

### Example No. 15

Except that 528.5 g of the same 75% solution of ethyl acetate aluminum diisopropylate as Example No. 11, 23.7 g of potassium acetate in place of barium diisopropoxide, 54.4 g of zirconium tetraisopropoxide (Zr(O-i-C₃H₇)₄) and 954.9 g of 2-propanol were dissolved, that 286.8 g of ion-exchanged water was dropped in the hydrolysis step, and that the burning temperature was further set at 900°C, a composite metallic oxide of Example No. 15 was prepared in the same manner as Example No. 11.

Then, the specific surface area was measured in the same manner as Example No. 11. In addition, Pt was likewise loaded, thereby preparing a pelletized catalyst which comprised a composite metallic catalyst of Example No. 15. The pelletized catalyst was similarly measured for the maximum NOₓ conversion after the durability treatment. The results are set forth in Table 2.

### Example No. 16

Except that 467.4 g of the same 75% solution of ethyl acetate aluminum diisopropylate as Example No. 11, 73.2 g of lanthanum acetate ((CH₃COO)₃La) in place of barium diisopropoxide and 467.4 g of 2-propanol were dissolved, that 230.6 g of ion-exchanged water was dropped in the hydrolysis step, and that the burning temperature was further set at 900°C, a composite metallic oxide of Example No. 16 was prepared in the same manner as Example No. 11.

Then, the specific surface area was measured in the same manner as Example No. 11. In addition, Pt was likewise loaded, thereby preparing a pelletized catalyst which comprised a composite metallic catalyst of Example No. 16. The pelletized catalyst was similarly measured for the maximum NOₓ conversion after the durability treatment. The results are set forth in Table 2.

### Example No. 17

Except that 612.5 g of the same 75% solution of ethyl acetate aluminum diisopropylate as Example No. 11, 28.8 g of strontium diisopropoxide (Sr(O-i-C₃H₇)₂) in place of barium diisopropoxide and 938.9 g of 2-propanol were dissolved, that 287.1 g of ion-exchanged water was dropped in the hydrolysis step, and that the burning temperature was further set at 1,000°C, a composite metallic oxide of Example No. 17 was prepared in the same manner as Example No. 11.

Then, the specific surface area was measured in the same manner as Example No. 11. In addition, Pt was likewise loaded, thereby preparing a pelletized catalyst which comprised a composite metallic catalyst of Example No. 17. The pelletized catalyst was similarly measured for the maximum NOₓ conversion after the durability treatment. The results are set forth in Table 2.

### Example No. 18

Except that 490.4 g of the same 75% solution of ethyl acetate aluminum diisopropylate as Example No. 11, 43.0 g of cesium acetate (CH₃COOCs) in place of barium diisopropoxide and 818.9 g of 2-propanol were dissolved, that 242.0 g of ion-exchanged water was dropped in the hydrolysis step, and that the burning temperature was further set at 1,000°C, a composite metallic oxide of Example No. 18 was prepared in the same manner as Example No. 11.

Then, the specific surface area was measured in the same manner as Example No. 11. In addition, Pt was likewise loaded, thereby preparing a pelletized catalyst which comprised a composite metallic catalyst of Example No. 18. The pelletized catalyst was similarly measured for the maximum NOₓ conversion after the durability treatment. The results are set forth in Table 2.

### Example No. 19

633.5 g of the same 75% solution of ethyl acetate aluminum diisopropylate as Example No. 11 and 41.1 g of titanium tetraisopropoxide (Ti(O-i-C₃H₇)₄) were mixed in 971.0 g of 2-propanol, and were dissolved by stirring at 82°C for 2 hours.

Next, the aforementioned solution was held at 82°C under reflux. While stirring the solution, 312.59 g of a dinitrodiammine platinum aqueous solution which contained 1.1 g of Pt was dropped to the solution to hydrolyze the alkoxides. The solution was further stirred at 82°C under reflux for 5 hours, thereby carrying out aging. Thereafter, except that the burning temperature was set at 800°C, a composite metallic oxide of Example No. 19 was prepared in the same manner as Example No. 11. The content of Pt included therein was 2% by weight.

Then, the specific surface area was measured in the same manner as Example No. 11. In addition, the composite metallic oxide was molded to a pellet shape by an ordinary method, thereby preparing a pelletized catalyst which comprised a composite metallic catalyst of Example No. 19. The resulting pelletized catalyst was placed in a flow of a lean-atmosphere model gas. Then, a durability treatment was carried out in which the pelletized catalyst was heated at 800°C for 5 hours. After the durability treatment, the pelletized catalyst was measured for each of the maximum conversions of NOₓ, HC and CO in a flow of a model gas which was equivalent to the ideal air-fuel ratio. The results are set forth in Table 2.

### Example No. 20

Except that 559.0 g of the same 75% solution of ethyl acetate aluminum diisopropylate as Example No. 11, 48.0 g of cerium tetraisopropoxide (Ce(O-i-C₃H₇)₄) in place of titanium tetraisopropoxide and 856.8 g of 2-propanol were dissolved, and that 275.8 g of a dinitrodiammine platinum aqueous solution which contained 1.1 g of Pt was dropped to the solution to hydrolyze the alkoxides, a composite metallic oxide of Example No. 20 was prepared in the same manner as Example No. 19. The content of Pt included therein was 2% by weight.

Then, the specific surface area was measured in the same manner as Example No. 11. In addition, out of this composite metallic oxide, a pelletized catalyst, which comprised a composite metallic catalyst of Example No. 20, was prepared by an ordinary method. In the same manner as Example No. 19, each of the maximum conversions of NOₓ, HC and CO was measured after the durability treatment. The results are set forth in Table 2.

### Comparative Example No. 5

320.3 g of aluminum triisopropoxide (Al(O-i-C₃H₇)₃) and 26.7 g of barium diisopropoxide were mixed in 941.0 g of 2-propanol, and were dissolved by stirring at 82°C for 2 hours.

Then, the resulting solution was held at 82°C under reflux. While stirring the solution, 68.0 g of 2,4-pentanedione was dropped. The solution was further stirred at 82°C for 2 hours. Thereafter, the solution was held at 82°C under reflux. While stirring the solution, 268.5 g of ion-exchanged water was dropped to the solution to hydrolyze the alkoxides. The solution was further stirred at 82°C under reflux for 5 hours, thereby carrying out aging.

Thereafter, the solution was vacuum-dried to remove the solvent, and the resulting precipitate was further dried at 120°C for 12 hours. Subsequently, the precipitate was calcined at 480°C for 4 hours, and was burned in air at 1,100°C for 5 hours, thereby obtaining a composite metallic oxide of this comparative example.

Then, the specific surface area was measured in the same manner as Example No. 11. In addition, Pt was likewise loaded, thereby preparing a pelletized catalyst. The pelletized catalyst was similarly measured for the maximum NOₓ conversion after the durability treatment. The results are set forth in Table 2.

### Comparative Example No. 6

Except that 266.8 g of aluminum triisopropoxide and 44.5 g of barium diisopropoxide were dissolved in 849.3 g of 2-propanol, that 235.4 g of ion-exchanged water was dropped in the hydrolysis step after 61.0 g of 2,4-pentanedione was dropped, and that the burning temperature was further set at 900°C, a composite metallic oxide of Comparative Example No. 6 was prepared in the same manner as Comparative Example No. 5.

Then, the specific surface area was measured in the same manner as Example No. 11. In addition, Pt was likewise loaded, thereby preparing a pelletized catalyst. The pelletized catalyst was similarly measured for the maximum NOₓ conversion after the durability treatment. The results are set forth in Table 2.

### Comparative Example No. 7

Except that 311.8 g of aluminum triisopropoxide, 25.0 g of potassium acetate in place of barium diisopropoxide, 36.2 g of titanium tetraisopropoxide and 1069.0 g of 2-propanol were dissolved, that 302.6 g of ion-exchanged water was dropped in the hydrolysis step after 76.4 g of 2,4-pentanedione was dropped, and that the burning temperature was further set at 900°C, a composite metallic oxide of Comparative Example No. 7 was prepared in the same manner as Comparative Example No. 5.

Then, the specific surface area was measured in the same manner as Example No. 11. In addition, Pt was likewise loaded, thereby preparing a pelletized catalyst. The pelletized catalyst was similarly measured for the maximum NOₓ conversion after the durability treatment. The results are set forth in Table 2.

### Comparative Example No. 8

Except that 274.3 g of aluminum triisopropoxide, 43.0 g of cesium acetate in place of barium diisopropoxide and 872.9 g of 2-propanol were dissolved, that 242.0 g of ion-exchanged water was dropped in the hydrolysis step after 62.7 g of 2,4-pentanedione was dropped, and that the burning temperature was further set at 1,000°C, a composite metallic oxide of Comparative Example No. 8 was prepared in the same manner as Comparative Example No. 5.

Then, the specific surface area was measured in the same manner as Example No. 11. In addition, Pt was likewise loaded, thereby preparing a pelletized catalyst. The pelletized catalyst was similarly measured for the maximum NOₓ conversion after the durability treatment. The results are set forth in Table 2.

### Comparative Example No. 9

354.3 g of aluminum triisopropoxide, 41.1 g of titanium tetraisopropoxide, and 1040.8 g of 2-propanol were mixed, and were dissolved by stirring at 82°C for 2 hours.

Then, the resulting solution was held at 82°C under reflux. While stirring the solution, 75.3 g of 2,4-pentanedione was dropped. The solution was further stirred at 82°C for 2 hours. Thereafter, the solution was held at 82°C under reflux. While stirring the solution, 312.6 g of a dinitrodiammine platinum aqueous solution which contained 1.1 g of Pt was dropped to the solution to hydrolyze the alkoxides. The solution was further stirred at 82°C under reflux for 4 hours, thereby carrying out aging. Thereafter, except that the burning temperature was set at 800°C, a composite metallic oxide of Comparative Example No. 9 was prepared in the same manner as Example No. 11. The content of Pt included therein was 2% by weight.

Then, the specific surface area was measured in the same manner as Example No. 11. In addition, out of this composite metallic oxide, a pelletized catalyst was prepared by an ordinary method. The resulting pelletized catalyst was placed in a flow of a lean-atmosphere model gas. Then, a durability treatment was carried out in which the pelletized catalyst was heated at 800°C for 5 hours. After the durability treatment, the pelletized catalyst was measured for each of the maximum conversions of NOₓ, HC and CO in a flow of a model gas which was equivalent to the ideal air-fuel ratio (stoichiometric point). The results are set forth in Table 2.

### Comparative Example No. 10

Except that 312.6 g of aluminum triisopropoxide, 48.0 g of cerium tetraisopropoxide in place of titanium tetraisopropoxide and 918.4 g of 2-propanol were dissolved, that 262.0 g of a dinitrodiammine platinum aqueous solution which contained 1.1 g of Pt was dropped to the solution to hydrolyze the alkoxides, and thereafter that the burning temperature was set at 800°C, a composite metallic oxide of Comparative Example No. 10 was prepared in the same manner as Example No. 11. The content of Pt included therein was 2% by weight.

Then, the specific surface area was measured in the same manner as Example No. 11. In addition, out of this composite metallic oxide, a pelletized catalyst was prepared by an ordinary method. The resulting pelletized catalyst was measured for each of the maximum conversions of NOₓ, HC and CO after the durability treatment in the same manner as Comparative Example No. 9. The results are set forth in Table 2.

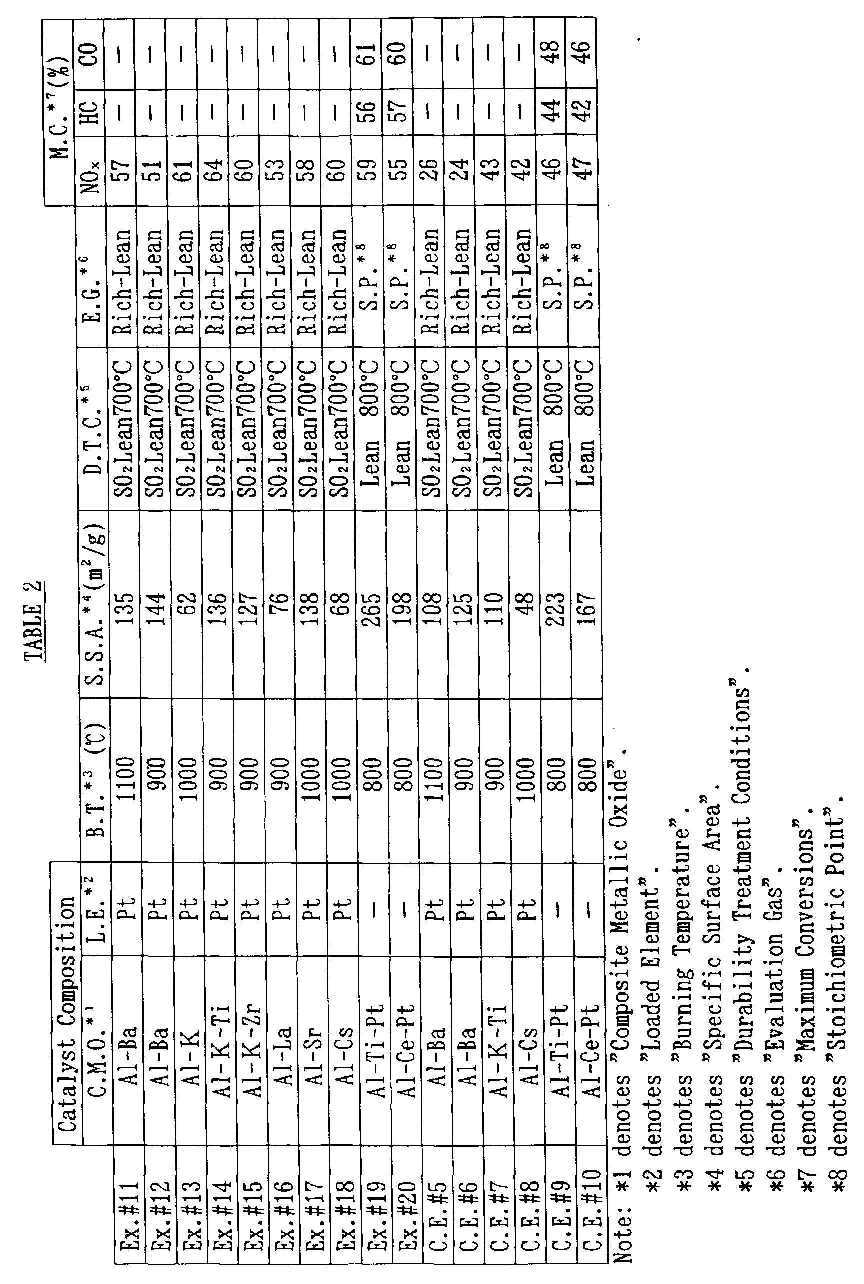

### Evaluation

The following are apparent by comparing Example Nos. 11 and 12 with Comparative Example Nos. 5 and 6, by comparing Example No. 14 with Comparative Example No. 7, and by comparing Example No. 18 with Comparative Example No. 8. Namely, the specific surface areas of the resulting composite metallic oxides enlarged by employing the substituted aluminum alkoxide as one of the starting materials, and the catalysts, which exhibited high NOₓ conversions even after the durability treatment, could be obtained by loading Pt on the composite metallic oxides.

The following are apparent by comparing Example Nos. 19 and 20 with Comparative Example Nos. 9 and 10. Namely, even when Pt was composited, the catalysts, which exhibited the high 3-way catalytic activities even after the durability treatment, could be obtained by employing the substituted aluminum alkoxide as one the starting materials.

Having now fully described the present invention, it will be apparent to one of ordinary skill in the art that many changes and modifications can be made thereto without departing from the spirit or scope of the present invention as set forth herein including the appended claims.

Disclosed is a process for producing a composite metallic oxide. A solution is prepared by mixing a substituted aluminum alkoxide and a titanium salt or a titanium alkoxide in an organic solvent. The substituted aluminum alkoxide is an aluminum alkoxide whose at least one or more alkoxyl groups are substituted by a chelating agent. Then, the substituted aluminum alkoxide and the titanium salt or the titanium alkoxide are hydrolyzed, and are thereafter dried and burned. Since the substituted aluminum alkoxide and the titanium salt or the titanium alkoxide exhibit hydrolysis rates which are substantially equal to each other, free Al₂O₃ is inhibited from generating. Thus, the resulting composite metallic oxide has a fully homogeneous composition, and exhibits a large specific surface area. Also disclosed are one modified version of the production process and three processes for producing a composite metallic catalyst, processes which utilize the production process.

## Claims

1. A process for producing a composite metallic oxide comprising the steps of:
preparing a solution in which a substituted aluminum alkoxide and at least one of a titanium salt and a titanium alkoxide are mixed in an organic solvent, wherein the substituted aluminum alkoxide is an aluminum alkoxide whose at least one or more alkoxyl groups are substituted by a chelating agent; and
drying and burning the components of the solution after hydrolyzing them.

2. A process for producing a composite metallic oxide comprising the steps of:
preparing a solution in which a substituted aluminum propoxide and a titanium tetraisopropoxide are mixed in an organic solvent, wherein the substituted aluminum propoxide is aluminum triisopropoxide whose at least one or more isopropoxyl groups are substituted by ethyl acetoacetate; and
drying and burning the alkoxides after hydrolyzing them.

3. A process for producing a composite metallic catalyst comprising the steps of:
preparing a solution in which a substituted aluminum alkoxide and at least one of a titanium salt and a titanium alkoxide are mixed in an organic solvent, wherein the substituted aluminum alkoxide is an aluminum alkoxide whose at least one or more alkoxyl groups are substituted by a chelating agent;
drying and burning the components of the solution after hydrolyzing them, thereby forming a support; and
loading a noble metal at least on the support.

4. A process for producing a composite metallic catalyst comprising the steps of:
preparing a solution in which a substituted aluminum propoxide and a titanium tetraisopropoxide are mixed in an organic solvent, wherein the substituted aluminum propoxide is aluminum triisopropoxide whose at least one or more isopropoxyl groups are substituted by ethyl acetoacetate;
drying and burning the alkoxides after hydrolyzing them, thereby forming a support; and
loading a noble metal at least on the support.

5. A process for producing a composite metallic catalyst comprising the steps of:
mixing a substituted aluminum alkoxide and a soluble compound in an organic solvent, wherein the substituted aluminum alkoxide is an aluminum alkoxide whose at least one or more alkoxyl groups are substituted by a chelating agent, and the soluble compound is soluble in the organic solvent and includes a catalyst metal element composed of at least one of an NOₓ storage element and a noble metal, the NOₓ storage element being at least one member selected from the group consisting of alkali metals, alkaline-earth metals and rare-earth elements; and
drying and burning the components of the mixture after hydrolyzing the substituted aluminum alkoxide at least.

6. The process for producing a composite metallic catalyst according to Claim 5, wherein said chelating agent is ethyl acetoacetate.

7. The process for producing a composite metallic oxide according to Claim 1, wherein the hydrolyzing is carried out at a temperature falling in the range of from 35 to 150°C.

8. The process for producing a composite metallic oxide according to Claim 1, wherein the hydrolyzing is carried out at a temperature falling in the range of from 40 to 100°C.

9. The process for producing a composite metallic oxide according to Claim 2, wherein the hydrolyzing is carried out at a temperature falling in the range of from 50 to 82°C.

10. The process for producing a composite metallic catalyst according to Claim 3 and Claim 5, wherein the hydrolyzing is carried out at a temperature falling in the range of from 35 to 150°C.

11. The process for producing a composite metallic catalyst according to Claim 3 and Claim 5, wherein the hydrolyzing is carried out at a temperature falling in the range of from 40 to 100°C.

12. The process for producing a composite metallic catalyst according to Claim 4 and Claim 6, wherein the hydrolyzing is carried out at a temperature falling in the range of from 50 to 82°C.
